(19) Europäisches Patentamt
European Patent Office
Office européen des brevets

(11) Veröffentlichungsnummer: **0 002 720**
**B1**

(12) # EUROPÄISCHE PATENTSCHRIFT

(45) Veröffentlichungstag der Patentschrift: **10.03.82**

(51) Int. Cl.[3]: **C 08 L 83/12**, C 08 C 1/14

(21) Anmeldenummer: **78101652.2**

(22) Anmeldetag: **13.12.78**

(54) **Mischung aus Ammoniak und oxalkylierten Polysiloxanen, deren Verwendung als Wärmesensibilisierungsmittel und Verfahren zur Herstellung wärmesensibilisierter Kautschuklatices.**

(30) Priorität: **20.12.77 DE 2756774**

(43) Veröffentlichungstag der Anmeldung:
**11.07.79 Patentblatt 79/14**

(45) Bekanntmachung des Hinweises auf die Patenterteilung:
**10.03.82 Patentblatt 82/10**

(84) Benannte Vertragsstaaten:
**BE DE FR GB IT NL**

(56) Entgegenhaltungen:
**DE - A - 2 005 974**
**US - A - 3 969 289**

(73) Patentinhaber: **BAYER AG**
**Zentralbereich Patente, Marken und Lizenzen**
**D-5090 Leverkusen 1, Bayerwerk (DE)**

(72) Erfinder: **Perrey, Hermann, Dr.**
**Am Oberfeld 39**
**D-4150 Krefeld (DE)**
Erfinder: **Matner, Martin, Dr.**
**Dorfstrasse 14**
**D-5068 Odenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 720 B1

# Mischung aus Ammoniak und oxalkylierten Polysiloxanen deren Verwendung als Wärmesensibilisierungsmittel und Verfahren zur Herstellung wärmesensibilisierter Kautschuklatices

Wärmesensibilisierte Latexmischungen sind bekannt. Sie werden aus wärmesensibel einstellbaren Polymerlatices hergestellt. Diese Latices können durch Emulsionspolymerisation hergestellt werden. Ihre Wärmesensibilisierung und dazu geeignete Mittel ist z.B. in den deutschen Patentschriften 1 268 828, 1 494 037 und in der US-Patentschrift 3 484 394 beschrieben.

Ein Verfahren zur Hersellung von wärmesensibilisierbaren Synthesekautschuk-Latices beschreibt die deutsche Patentschrift 1 243 394. Wärmesensibilisierte Latexmischungen können zur Imprägnierung von Faservliesen und zur Herstellung von Hohlkörpern (z.B. Handschuhen) nach dem Tauchverfahren verwendet werden.

Als Wärmesensibilisierungsmittel sind in den oben aufgeführten Literaturstellen oxalkylierte Polysiloxane beschrieben. Die mit diesen Wärmesensibilisierungsmitteln hergestellten wärmesensibilisierten Latexmischungen sind jedoch bei der Verarbeitung nicht ausreichend stabil. So sind die Mischungen meist nicht lagerstabil, die eingestellte Koagulationstemperatur fällt mit der Zeit und es kommt bereits in den Vorratsgefäßen vor der eigentlichen Verarbeitung selbst ohne äußere Einwirkung zu Eindickungen oder Stippenbildungen. Oft noch deutlicher wird die mangelnde Stabilität bei der Verarbeitung selbst. Hierbei kommt es an Rührern, Pumpen, Umlenkrollen oder zwischen Quetschwalzen zu unerwünschten Abscheidungen, die die weitere Verarbeitung erschweren.

Zur Verbesserung der mechanischen Stabilität werden den mit den oxalkylierten Polysiloxanen wärmesensibel eingestellten Latexmischungen nichtionogene Emulgatoren zugesetzt. Um zu ausreichenden Stabilitäten zu kommen, müssen jedoch nicht unerhebliche Mengen zugefügt werden.

Hierdurch wird meist die Wärmesensibilisierbarkeit verschlechtert, d.h. man braucht größere Mengen an Wärmesensibilisatoren, um eine vorgegebenene Koagulationstemperatur einzustellen.

Zur Erhöhung der Stabilität wird den mit den bekannten oxalkylierten Polysiloxanen wärmesensibel eingestellten Latices manchmal auch Ammoniak zugesetzt. Doch auch durch diese Maßnahme kann auf die Zugabe von nichtionogenen Emulgatoren als Stabilisierungsmittel nicht verzichtet werden.

Überraschenderweise wurde gefunden, daß bestimmte alkoxylierte Polysiloxane als Wärmesensibilisatoren in Kombination mit Ammoniak auch ohne Emulgatorzusätze zu außerordentlich stabilen wärmesensiblen Latexmischungen führen.

Die US—PS 3 969 289 beschreibt wärmesensibilisierte Kautschuklatices, die unter anderem neben einem bestimmten Vulkanisationsbeschleuniger ein Wärmesensibilierungsmittel gemäß US 3 255 140 und 3 484 394 und Ammoniak enthalten, wobei der Ammoniak dazu dient, eine unerwünschte frühzeitige Wirksamkeit des Beschleunigers zu verhindern. Die in der erfindungsgemäßen Mischung vorhandenen Polysiloxane sind, wie im folgenden näher ausgeführt wird, strukturell verschieden und besitzen eine bessere Wirksamkeit.

Ihre gute Wirksamkeit beruht auf einer bestimmten Polyethersequenz im Rest X der nachstehenden Formel, die dadurch erhalten wird, daß entgegen der Lehre der US—PS 3 255 140 und 3 484 394 (Spalte 5, Zeilen 35—62) Ethylenoxid und Propylenoxid nicht gleichzeitig, sondern erfindungsgemäß im gewissen Umfang nacheinander mit einem niederen Alkohol zu einer Polyaxialalkylenkette umgesetzt werden. Dieses vom Stand der Technik abweichende Herstellverfahren der Polyetherkette verursacht im Polysiloxan, wenn es als Wärmesensibilisierungsmittel in Kombination mit Ammoniak Kautschuklatices zugesetzt wird, eine mehrtägige Konstanz des Koagulationspunktes.

Gegenstand der Erfindung ist daher eine Mischung von Ammoniak und oxalkylierten Polysiloxanen der Formel

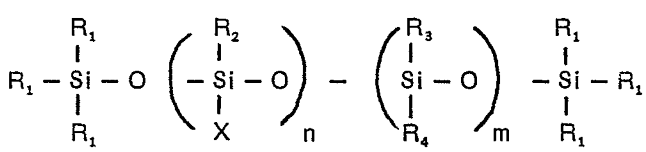

in der

$R_1$, $R_2$, und $R_3$ unabhängig voneinander einen gegebenenfalls durch Halogen (Chlor, Brom) substituierten Alkyl- oder Arylrest mit 1—10 C-Atcmen bedeuten,

$R_4$ für Wasserstoff oder einen gegebenenfalls durch Halogen (Chlor, Brom) substituierten Alkyl- oder Arylrest mit 1—10 C-Atomen steht,

n eine Zahl von 1—50 und

m eine Zahl von 0—50 und

X für den Rest

$$—(CH_2)_p(X)_q—(O—CHR_5—CHR_6)_x(O—CHR_8—CHR_7)_y—OR_9 \qquad (Ia)$$

steht,

p eine Zahl von 1—8 und

q Null oder die Zahl 1 bedeutet,

Y für $-\underset{\underset{CH_2-OH}{|}}{CH}-$, $-\underset{\underset{OH}{|}}{CH}-CH_2-$, $-O-CH_2-CHOH-CH_2-$, $-O-CH_2-\underset{\underset{CH_2OH}{|}}{CH}-$

oder $-NH-CO-$ steht,

$R_5$, $R_6$, $R_7$ Wasserstoff und

$R_8$ Methyl bedeuten

$R_9$ einen Alkylrest eines niederen Alkohols darstellt und

x und y für die Zahlen 5—100 steht,

dadurch gekennzeichnet, daß der Rest

$$-(O-CHR_5-CHR_6)_x-(O-CHR_8-CHR_7)_y-OR_9$$

durch Umsetzung eines niederen Alkohols $R_9OH$, zunächst mit einer Mischung aus Propylenoxid und 80 bis 90% der gesamten Menge des Ethylenoxides und anschließend mit den restlichen 10 bis 20% des Ethylenoxides hergestellt wird.

Bevorzugte Reste $R_1$ bis $R_3$ sind Alkyl- und Arylreste mit 1—8 C-Atomen, wie z.B. der Methyl-, Ethyl-, Propyl- oder Butylrest sowie der Phenyl-, Tolyl-, Xylylrest, die gegebenenfalls durch Halogene wie z.B. Chlor und Brom einfach substituiert sein können.

Bevorzugt stehen in den Formel (I) und (Ia)

$R_1$, $R_2$ und $R_3$ für die Phenyl- und Methylgruppe und besonders bevorzugt für die Methylgruppe,

$R_4$ für Wasserstoff und Methylgruppe und besonders bevorzugt für die Methylgruppe

n für die Zahlen 3—20 und besonders bevorzugt für die Zahlen 4—10,

m für die Zahlen 0—20 und besonders für die Zahlen 0—10,

Y für $O-CH_2-CHOH-CH_2-$, $-O-CH_2-\underset{\underset{CH_2-OH}{|}}{CH}-$ oder $-NH-CO-$,

p für die Zahlen 1 und 3 und besonders bevorzugt für die Zahl 3,

q für Null und 1 und besonders bevorzugt für die Zahl 1,

$R_9$ für einen 1 bis 6 Atome enthaltenden Alkylrest,

x für die Zahlen 10—50 und besonders bevorzugt für 15—35 und

y für die Zahlen 8—40 und besonders bevorzugt für 12—25.

Die alkoxylierten Polysiloxane können wie folgt hergestellt werden:

Beispielsweise lassen sich Epoxide, die eine C=C Doppelbindung enthalten, wie z.B. Allylglycidether oder Butadienmonoepoxid, mit SiH-gruppenhaltigen Polysiloxanen platinkatalysiert zu Polyepoxypolysiloxanen umsetzen, die dann durch sauer katalysierte Reaktionen der Epoxygruppen mit Polyalkylenglykolmonoether zu den erfindungsgemäßen alkoxylierten Polysiloxanen führen. Ferner ist es möglich, Polyalkylenglykolmonoether durch Umsetzung mit Alkenylhalogeniden, wie z.B. Allylchlorid, in ungesättigte Polyalkylenglykolether oder durch Umsetzung mit ungesättigten Isocyanaten, wie z.B. Allylisocyanat, in die ungesättigten Urethane zu überführen, um diese ungesättigten Derivate dann platinkatalysiert an SiH-gruppenhaltige Polysiloxane zu addieren. Eine weitere Methode zur Herstellung der erfindungsgemäßen Wärmesensibilisierungsmittel besteht in der Umsetzung von Polyalkylenglykolmonoethern mit $Si-CH_2-Cl$-gruppenhaltigen Polysiloxanen.

Die zur Herstellung der oxalkylierten Polysiloxane verwendeten Polyalkylenglykolmonoether erhält man durch Polyalkoxylierung niederer Alkohole, wie z.B. Methanol, Ethanol, Propan-, Butan-, Pentan- oder Hexanole, mit Ethylen- und Propylenoxid. Die Alkohole werden zunächst mit einer Mischung aus Propylenoxid und 80—90% der gesamten Menge des Ethylenoxids zu Mischpolymeren umgesetzt und hierauf die restlichen 10—20% des Ethylenoxids, so daß die Endgruppen dieser Polyalkylenglykolmonoether nahezu vollständig primäre OH-Gruppen sind. Auf diese Weise erhält man zwangsläufig eine definierte regelmäßige Anordnung der Ethylenoxid- und Propylenoxid- einheiten zueinander. Bevorzugte Polyalkylenglykolmonoäther enthalten 40—60 Gew.-% Äthylenoxid, besonders bevorzugte sind aus gleichen Gewichtsmengen Äthylen- und Propylenoxid aufgebaut. Bevorzugt werden Polyalkylenglykolmonoäther mit Molekulargewichten von 1000—5000, besonders bevorzugt mit 1500 bis 3000 eingesetzt.

Bei der Umsetzung der Polyepoxysiloxane mit den Polyalkylenglykolmonoäthern zu den Polyalkylenglykolpolysiloxanen werden die Hydroxyverbindungen bevorzugt in 10—100%igem und besonders bevorzugt in 10—50%igem molaren Überschuß mit den Epoxygruppen umgesetzt. Geringere Überschüsse, sowie stöchiometrische oder gar unterstöchiometrische Umsetzungsverhältnisse von Hydroxy- zu Epoxygruppen sind zwar ebenfalls möglich, führen jedoch häufig nur zu unlöslichen, vernetzten Produkten.

Auch bei der Herstellung der oxalkylierten Polysiloxane durch Umsetzung von ungesättigten

Polyalkylenglykoläthern mit Si-H-gruppenhaltigen Polysiloxanen oder durch Umsetzung von Polyalkylenglykolmonoäthern mit Si-$CH_2$-Cl-gruppenhaltigen Polysiloxanen ist es empfehlenswert, die ungesättigten Polyalkylenglykoläther bzw. die Polyalkylenglykolmonoäther im Überschuß einzusetzen.

In der Regel sind die Produkte wasserlöslich, aber auch wasserunlösliche Produkte sind erfindungsgemäß verwendbar. Da die Wirksamkeit der Polyalkylenglykolpolysiloxane mit guter Verteilung der Produkte steigt, ist es bei wasserunlöslichen Substanzen angebracht, zur Verbesserung der Emulgierbarkeit den Produkten gängige Emulgatoren, wie z.B. Alkylarylsulfonate, Alkylsulfate, Fettsäuresalze oder dgl. zuzufügen. Zusätze von 1—10%, bezogen auf die Polyalkylenglykolpolysiloxane, sind meist ausreichend, größere Mengen sind zu vermeiden, da sich anionenaktive Emulgatoren als solche ungünstig auf die Stabilität der Latexmischunger auswirken können.

Die erfindungsgemäße Mischung aus Ammoniak und oxalkylierten Polysiloxanen kann als Wärmesensibilisionsmittel für Kautschuklatices eingesetzt werden.

Zur Herstellung der wärmesensibiliserbaren stabilen Latices selbst können übliche olefinisch ungesättigte Monomere in wäßriger Emulsion polymerisiert werden. Beispiele für die Herstellung derartiger Latices finden sich in der deutschen Patentschrift 1 243 394 und in den deutschen Offenlegungsschriften 2 232 526 und 2 005 974. Als Monomere kommen alle radikalisch polymerisierbaren olefinisch ungesättigten Verbindungen in Frage, z.B. Äthylen, Butadien, Isopren, Acrylnitril, Styrol, Divinylbenzol, $\alpha$-Methylstyrol, Methacrylnitril, Acrylsäure, Methacrylsäure, 2-Chlorbutadien-1,3, Ester der Acrylsäure und Methacrylsäure mit $C_1$—$C_8$-Alkoholen oder Polyolen, Acrylamid, Methacrylamid, N-Methylol(meth)acrylamid. (Meth)acrylamido-N-methylolmethyläther, Itakonsäure, Maleinsäure. Fumarsäure, Diester und Halbester ungesättigter Dicarbonsäuren, Vinylchlorid, Vinylacetat, Vinylidenchlorid, die allein oder in Kombination miteinander eingesetzt werden können.

Die Polymerisation wird in Gegenwart von Emulgatoren durchgeführt, wobei die üblichen nichtionischen oder anionischen Emulgiermittel allein oder in Kombination miteinander verwendet werden können. Die Gesamtmenge an Emulgator beträgt ca. 0,1 bis 10 Gew.-%, bezogen auf die Monomeren.

Die Emulsionspolymerisation kann mit Radikalbildnern, vorzugsweise mit organischen Peroxidverbindungen ausgelöst werden, die in Mengen von 0,01 bis 2 Gew.-% bezogen auf Monomere, eingesetzt werden. Je nach Monomerkombination können zur Erniedrigung des Molekulargewichtes des Polymerisats geringe Mengen an Reglern mitverwendet werden, z.B. Mercaptane, Halogenkohlenwasserstoffe. Die Emulsionspolymerisation ist auf zwei Wegen möglich: Man kann die Gesamtmenge der Monomeren und den größten Teil der die Emulgatoren enthaltenden wäßrigen Phase vorlegen, die Polymerisation durch Zugabe des Initiators starten und im Verlauf der Polymerisation den Rest der wäßrigen Phase kontinuierlich oder absatzweise zugeben. Man kann auch die Technik des "Monomerenzulaufs" benutzen; dabei wird nur ein Teil der Monomeren und der das Emulgiermittel enthaltenden wäßrigen Phase vorlegt und nach Starten der Polymerisation der Rest der Monomeren und der wäßrigen Phase gleichmäßig oder absatzweise nach Maßgabe des Umsatzes zugefügt. Der zudosierte Monomerenanteil kann in der wäßrigen Phase voremulgiert sein. Beide Verfahren sind bekannt.

Die wärmesensibel einstellbaren Latices können vor oder bei der Verarbeitung mit Zusatzstoffen versetzt werden. So unterstützen Säureabspalter, die zusätzlich zum Sensibilisierungsmittel beigefügt werden, die Koagulierfähigkeit, indem sie die Koagulationstemperatur herabsetzen. Andere Zusätze sind z.B. Farbstoffe, Pigmente, Füllstoffe, Verdicker, Elektrolyte, Alterungsschutzmittel, wasserlösliche Harze oder Vukanisationschemikalien.

Im Anschluß an die Herstellung werden die wärmesensibilisierbaren Latices durch Zusatz der oxalkylierten Polysiloxane in Mengen von 0,05 bis 10 Gew.-% bevorzugt 0,05 bis 3 Gew.-%, und 0,05 bis 3 Gew.-%, bevorzugt 0,05 bis 1,5 Gew.-%, Ammoniak, jeweils bezogen auf das Polymerisat, wärmesensibel eingestellt. Hierbei können das Polysiloxan und der Ammoniak den wärmesensibilisierbaren Latices im Gemisch zugefügt werden.

Dieses Gemisch, das von 100 Gew.-Teilen zu 1,5 bis 99,5 Gew.-Teilen aus Polysiloxan und zu 98,5 bis 0,5 Gew.-Teilen aus Ammoniak besteht, wird vorzugsweise als 10 bis 90%ige wäßrige Lösung zugegeben. Die Herstellung der Mischung erfolgt unter Rühren vorzugsweise bei Temperaturen zwischen 5 und 50°C. Hierzu wird das Polysiloxan vorgelegt und die wäßrige Ammoniaklösung eingetragen oder durch Zugabe von Wasser zum Polysiloxan oder Lösen vom Polysiloxan in Wasser zunächst eine wäßrige Lösung hergestellt, die dann mit einer wäßrigen Ammoniaklösung versetzt wird oder in die Ammoniak gasförmig eingeleitet wird. Ebenso ist es möglich, die wäßrige Ammoniaklösung vorzulegen und das Polysiloxan in 100 %iger Form oder in wäßriger Lösung zuzufügen.

Die Herstellung des Gemisches aus Ammoniak und Polysiloxan kann auch ebenso vorteilhaft durch getrennte Zugabe zu den wärmesensibilisierbaren Kautschuklatices erfolgen. Hierbei kann das Polysiloxan 100%ig oder häufig vorteilhafter als wäßrige Lösung und der Ammoniak in wäßriger, vorzugsweise in 5 bis 35%iger, Lösung zugegeben werden. Im Falle der getrennten Zugabe ist es vorteilhaft, den Ammoniak vor dem Wärmesensibilisierungsmittel zuzugeben. Ferner ist es möglich, die Ammoniakmenge bereits ganz oder teilweise bei der Polymerisation zuzusetzen.

Es zeigt sich, daß die wärmesensiblen Latexmischungen, die die erfindungsgemäßen Wärmesensibilisierungsmittel in Verbindung mit Ammoniak enthalten, besonders stabil sind, so daß auch bei längerer Lagerung oder bei mechanischen Belastungen, wie z.B. beim Rühren oder Pumpen, keinerlei Koagulatbildung auftritt.

Die erfindungsgemäßen wärmesensibel eingestellten Latexmischungen können z.B. zur Bindung von Faservliesen eingesetzt werden, die aus synthetischen oder natürlichen Fasern aufgebaut sind. Beispiele sind Faservliese aus Baumwolle, Zellwolle, Wolle, Polyamiden, Polyestern, Polyacrylnitril, Glasfasern, Steinwolle, Asbestwolle oder Metallfäden.

Beispiel 1

Zu einer Mischung aus 1460 g eines Polyalkylenglykolmonoäthers der OH-Zahl 25, der durch Alkoxylierung von Butanol mit gleichen Gew.-Teilen Äthylen- und Propylenoxid hergestellt wird, wobei zunächst 80% der Äthylenoxid- mit der gesamten Propylenoxidmenge im Gemisch und hierauf die restlichen 20% des Äthylenoxids umgesetzt werden, und 2 g Bortrifluoridätherat werden innerhalb einer Stunde 105 g eines Polyepoxypolysiloxans der Formel

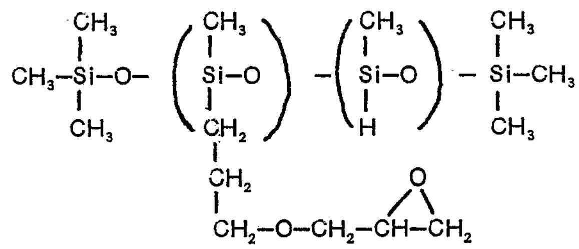

mit einem 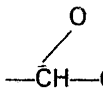-Epoxidgehalt von 19,9 Gew.-% und einem Si-H-Gehalt von 2,33 Gew.-% zugetropft. Hierauf wird 3 Stunden bei Zimmertemperatur und 1 Stunde bei 60°C nachgerührt. Man erhält ein farbloses, in kaltem Wasser klar lösliches Öl.

Beispiel 2

Analog Beispiel 1 werden 1460 g des in Beispiel 1 beschriebenen Polyalkylenglykolmonoäthers unter Katalyse von 2 g Bortrifluoridätherat mit 100,5 g eines Polyepoxypolysiloxans der Formel

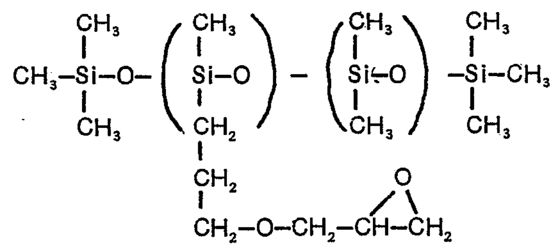

mit einem Epoxidgehalt von 20,9 Gew.-% umgesetzt. Man erhält ein farbloses, in kaltem Wasser klar lösliches Öl.

Beispiel 3

Analog Beispiel 1 werden 1460 g des in dem in Beispiel 1 beschriebenen Polyalkylenglykolmonoethers unter Katalyse von 2 g Bortrifluoridetherat mit 225,6 g eines Polyepoxypolysiloxans der Formel

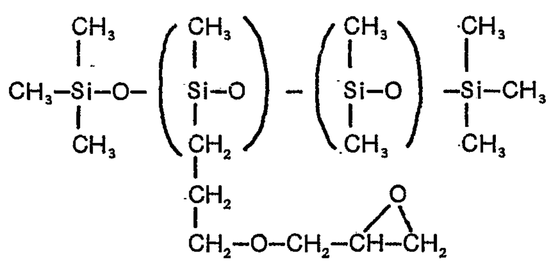

mit einem Epoxidgehalt von 9,3 Gew.-% umgesetzt. Man erhält ein farbloses, in kaltem Wasser klar lösliches Öl.

Beispiel 4

Analog Beispiel 1 werden 1700 g eines Polyalkylenglykolmonoethers der OH-Zahl 22, der durch Alkoxylierung von Butanol mit gleichen Gewichtsteilen Äthylen und Propylenoxid hergestellt wird, wobei zunächst 80% der Äthylenoxid- mit der gesamten Propylenoxidmenge im Gemisch und hierauf

die restlichen 20% des Äthylenoxids umgesetzt werden, unter Katalyse von 2,5 g Bortrifluoridätherat mit 105 g des im Beispiel 1 beschriebenen Polyepoxypolysiloxans umgesetzt. Man erhält ein farbloses, in kaltem Wasser klar lösliches Öl.

Beispiel 5

Analog Beispiel 1 werden 900 g eines Polyalkylenglykolmonoäthers der OH-Zahl 40,5, der durch Alkoxylierung von Butanol mit einer Mischung aus 55 Gew.-% Äthylen- und 45 Gew.-% Propylenoxid hergestellt wird, wobei zunächst 82% der Äthylenoxid- mit der gesamten Propylenoxidmenge im Gemisch und hierauf die restlichen 18% des Äthylenoxids umgesetzt werden, unter Katalyse von 1,35 g Bortrifluoridätherat mit 105 g des im Beispiel 1 beschriebenen Polyepoxypolysiloxans umgesetzt. Man erhält ein farbloses, in kaltem Wasser klar lösliches Öl.

Beispiel 6

Analog Beispiel 1 werden 1050 g eines Polyalkylenglykolmonoäthers der OH-Zahl 35, der durch Alkoxylierung von Butanol mit gleichen Gew.-Teilen Äthylen- und Propylenoxid hergestellt wird, wobei zunächst 80% der Äthylenoxid- mit der gesamten Propylenoxidmenge im Gemisch und hierauf die restlichen 20% des Äthylenoxids umgesetzt werden, unter Katalyse von 1,5 g Bortrifluoridätherat mit 105 g des in Beispiel 1 beschriebenen Polyepoxypolysiloxans umgesetzt. Man erhält ein farbloses, in kaltem Wasser klar lösliches Öl.

Beispiel 7

Analog Beispiel 1 werden 1350 g eines Polyalkylenglykolmonoäthers der OH-Zahl 27, der durch Alkoxylierung einer Mischung aus gleichen Gewichtsteilen Äthylen- und Propylenoxid hergestellt wird, unter Katalyse von 2,0 g Bortrifluoridätherat mit 105 g des in Beispiel 1 beschriebenen Polyepoxypolysiloxans umgesetzt. Man erhält ein farbloses, in kaltem Wasser klar lösliches Öl.

Beispiel 8

Eine Mischung von 1 l Toluol und 1122 g des in Beispiel 1 beschriebenen Polyalkylenglykolmonoäthers werden am Wasserarscheider von Feuchtigkeitsspuren befreit. Man fügt 1 g Dibutylzinndilaurat hinzu, tropft innerhalb von 20 Minuten in der Siedehitze 41,5 g Allylisocyanat hinzu und erhitzt eine weitere Stunde zum Rückfluß. Hierauf wird das Toluol abdestilliert, zunächst unter Normaldruck, zum Schluß im Wasserstrahlvakuum bei 15 mm Hg. Das erhaltene Allylurethan des Polyalkylenglykolmonoäthers wird mit 41,6 g eines SiH-gruppenhaltigen Polysiloxans der Formel

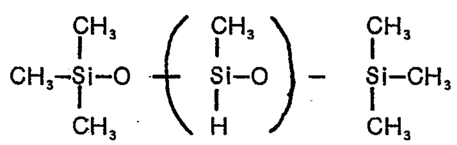

mit einem Si-H-Gehalt von 34,9% unter Katalyse von 10 g $Al_2O_3$, auf welchem 2% Platin niedergeschlagen waren, 4 bis 5 Stunden bei 150°C umgesetzt. Man erhält ein gelbes, klar in kaltem Wasser lösliches Öl.

Beispiel 9

210,0 Gew.-Teile eines 47,5%igen Latex des Copolymerisates von 61,0 Gew.-% Butadien, 35,0 Gew.-% Acrylnitril und 4 Gew.-% Methacrylsäure werden mit 40,0 Gew.-Teilen einer Vulkanisationspaste folgenden Zusammensetzung

| | | |
|---|---|---|
| 0,2 | Gew.-Teile | Kolloidschwefel |
| 5,0 | Gew.-Teile | Zinkoxid |
| 1,5 | Gew.-Teile | 2-Mercaptobenzthiazol |
| 0,2 | Gew.-Teile | Zink-diäthyl-dithiocarbamat |
| 5,0 | Gew.-Teile | Titandioxid |
| 28,1 | Gew.-Teile | einer 5%igen wäßrigen Lösung eines Kondensationsproduktes aus Naphthalinsulfonsäure mit Formaldehyd |
| 0,2 | Gew.-Teile | der Verbindung des Beispiels 1 |
| 70,0 | Gew.-Teile | Wasser und |
| 1,0 | Gew.-Teile | einer 25%igen wäßrigen Ammoniaklösung |

vermischt und der Koagulationspunkt der Mischung nach 1/2 Stunde und 7 Tagen Standzeit bestimmt. Außerdem wird die mechanische Stabilität der Mischung mit Hilfe eines Rührtestes ermittelt.

Method zur Ermittlung des Koagulationspunktes:

Circa 10 g der wärmesensibel eingestellten Mischung werden in ein Becherglas eingewogen und in ein Wasserbad mit einer konstanten Temperatur von 80°C gebracht. Unter gleichmäßigem Rühren der Mischung mit einem Thermometer werden das Koagulierverhalten und der Temperaturanstieg verfolgt. Als Koagulationspunkt der Mischung wird die Temperatur angegeben, bei der eine vollständige und endgültige Trennung von Polymerisat und wäßriger Phase eintritt.

Methode zur Bestimmung der mechanischen Stabilität:

500,0 g der zu prüfenden Latexmischung werden bei 20°C in einem Becherglas von 13 cm Durchmesser der mechanischen Beanspruchung durch einen schnell laufenden Vierblattrührer unterworfen. Der Flügel des Rührers besitzt einen Durchmesser von ca. 8 cm. Die Rührgeschwindigkeit beträgt 1500 U/min. Jede 5. Minute wird eine Probe der Latexmischung entnommen, auf einen dunklen Papierstreifen ausgestrichen und auf Koagulatbildung hin untersucht. Sobald die ersten Koagulatteilchen beobachtet werden, wird die Zeit gestoppt und der Test abgebrochen. Die Zeitspanne bis zum Auftreten des ersten Koagulates dient als Kriterium für die mechanische Stabilität. Spätestens nach 60 Minuten wird der Test abgebrochen.

Koagulationspunkt: nach 1/2 Stunde 41°C
nach 7 Tagen 40°C.
Mechanische Stabilität 20 bis 25 Minuten.

Bei Einsatz von 0,1 Gew.-Teilen der Verbindung des Beispiels 1 wird ermittelt:

Koagulationspunkte: nach 1/2 Stunde 50°C
Koagulationspunkte: nach 7 Tagen 50°C
Mechanische Stabilität 30 Minuten.

Bei Einsatz von 0,4 Gew.-Teilen der Verbindung wird gemessen:

Koagulationspunkte: nach 1/2 Stunde 35°C
Koagulationspunkte: nach 7 Tagen 34°C.
Mechanische Stabilität 15 bis 10 Minuten.

Beispiele 10—16

Analog Beispiel 9 werden die Verbindungen der Beispiele 2 bis 7 in die Mischung eingesetzt und die Koagulationspunkte und die mechanischen Stabilitäten ermittelt.

| | | | Koagulationspunkte nach | | mech. Stabilität |
|---|---|---|---|---|---|
| Beispiel Nr. | Verbindung Einsatz-g | aus Beispiel | 1/2 Stunde °C | 7 Tagen °C | Minuten |
| 10 | 0,2 | 2 | 40 | 40 | 20—25 |
| 11 | 1,0 | 3 | 45 | 47 | 20 |
| 12 | 0,2 | 4 | 45 | 46 | 25 |
| 13 | 0,2 | 5 | 50 | 50 | 30 |
| 14 | 0,2 | 6 | 44 | 44 | 25 |
| 15 | 0,2 | 7 | 43 | 42 | 20 |
| 16 | 0,2 | 8 | 47 | 52 | 15—20 |

Beispiel 17

Zu 200 g einer in üblicher Weise hergestellten 50%igen wäßrigen Dispersion eines Copolymerisates aus 62 Teilen Butadien, 36 Teilen Acrylnitril und 2 Teilen Methacrylsäure werden 40,0 Gew.-Teile der in Beispiel 9 beschriebenen Vulkanisationspaste, 0,3 Gew.-Teile der Verbindung des Beispiels 1, 80,0 Gew.-Teile Wasser und 1,0 Gew.-Teile einer 25%igen wäßrigen Ammoniaklösung gegeben. Die Bestimmung der Koagulationspunkte und der mechanischen Stabilität nach den unter Beispiel 9 beschriebenen Methoden brachte folgendes Ergebnis:

Koagulationspunkte: nach 1/2 Stunde 42°C,
nach 7 Tagen 42°C.
Mechanische Stabilität 25 bis 30 Minuten.

Beispiel 18

Zur Herstellung einer wärmesensibel verarbeitbaren Latexmischung werden folgende Bestandteile zusammengeführt:

225,0 Gew.-Teile eines 45%igen Latex des Copolymerisates von 60,0 Gew.-% Butadien, 26,0 Gew.-% Styrol, 10,0 Gew.-% Acrylnitril, 3,0 Gew.-% Methacrylsäure und 1,0 Gew.-% Methacrylamid; 10,0 Gew.-Teile einer 20%igen wäßrigen Lösung eines äthoxylierten, aliphatischen Alkohols; 10,0 Gew.-Teile einer 10%igen wäßrigen Ammoniumchloridlösung; 40,0 Gew.-Teile der in Beispiel 9 beschriebenen Vulkanisationspaste; 0,8 Gew.-Teile der Verbindung des Beispiels 1; 72,0 Gew.-Teile Wasser und 2,0 Gew.-Teile einer 25%igen wäßrigen Ammoniaklösung.

Die Messung der Koagulationspunkte der Latexmischung hatte folgendes Ergebnis:

Koagulationspunkte: nach 1 Stunde 45°C
nach 7 Tagen 45°C

Mechanische Stabilität 15 Minuten.

Beispiel 19 (Vergleichsbeispiel)

Es wird eine Latexmischung analog Beispiel 9 hergestellt. Als Wärmesensibilisierungsmittel wird das Organopolysiloxan A aus Beispiel 1 der DAS 1 494 037 eingesetzt.

| Probe | Einsatzmenge g | Koagulationstemperatur nach 1/2 Stunde (°C) | |
|---|---|---|---|
| a | 0,1 | 74 | Die Mischung ist nach 2 Stunden bei RT koaguliert |
| b | 0,2 | Die Mischung ist bereits nach einer halben Stunde koaguliert | |

RT = Raumtemperatur

Beispiel 20 (Vergleichsbeispiel)

Es wird eine Latexmischung analog Beispiel 9 hergestellt. Als Wärmesensibilisierungsmittel werden hier jedoch 0,2 g des Siloxanoxyalkylen-Copolymeren des Beispiels 5 der US 3 484 394 eingesetzt.

Koagulationspunkt: sofort/46°C
Mechanische Stabilität: 15 Minuten

Wird die Mischung ammoniakfrei hergestellt, wird bei der Prüfung der mechanischen Stabilität unmittelbar nach Anstellen des Vierblattrührers Koagulatbildung festgestellt.

Beispiel 21

Man gibt zu 200 g des Polysiloxans des Beispiels 2 bei Zimmertemperatur unter Rühren 300 g Wasser und hierauf 1000 g einer 25%igen wäßrigen Ammoniaklösung. Man erhält eine klare, dünnflüssige Lösung.

**Patentansprüche**

1. Mischung aus Ammoniak und einem oxalkylierten Polysiloxan der allgemeinen Formel

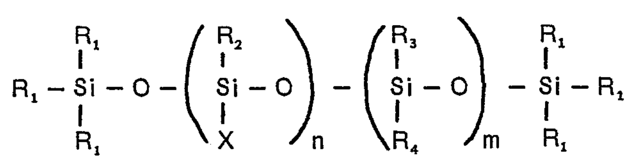

(I)

in der

$R_1$, $R_2$ und $R_3$ unabhängig voneinander einen gegebenenfalls durch Halogen substituierten Alkyl- oder Arylrest mit 1 bis 10 C-Atomen bedeuten,

$R_4$ für Wasserstoff oder einen gegebenenfalls durch Halogen substituierten Alkyl- oder Arylrest mit 1 bis 10 C-Atomen steht,

n eine Zahl von 1 bis 50 und

m eine Zahl von 0 bis 50 und

X für den Rest

$$-(CH_2)_p-(Y)_q-(O-CHR_5-CHR_6)_x-(O-CHR_8-CHR_7)_y-OR_9 \qquad (Ia)$$

steht,

p eine Zahl von 1 bis 8 und
q Null oder die Zahl 1 bedeutet,
Y für $-\underset{CH_2OH}{\underset{|}{CH}}-$, $-\underset{OH}{\underset{|}{CH}}-CH_2-$, $-O-CH_2-CHOH-CH_2-$, $-O-CH_2-\underset{CH_2-OH}{\underset{|}{CH}}-$

oder $-NH-CO-$

steht,

$R_5$, $R_6$, $R_7$ Wasserstoff und
$R_8$ Methyl bedeuten,
$R_9$ einen Alkylrest eines niederen Alkohols darstellt,
x und y für die Zahlen 5 bis 100 stehen, dadurch gekennzeichnet, daß der Rest

$$-(O-CHR_5-CHR_6)_x-(O-CHR_8-CHR_7)_y-OR_9$$

durch Umsetzung eines niederen Alkohols $R_9OH$, zunächst mit einer Mischung aus Propylenoxid und 80 bis 90% der gesamten Menge des Ethylenoxides und anschließend mit den restlichen 10 bis 20% des Ethylenoxides hergestellt wird.

2. Mischung aus Ammoniak und einem oxalkylierten Polysiloxan der allgemeinen Formel (I) und (Ia) gemäß Anspruch 1, in der

$R_1$, $R_2$ und $R_3$ den Methyl- oder Phenylrest und
$R_4$ die Methylgruppe oder Wasserstoff bedeutet,
n für die Zahlen 3 bis 20 und
m für die Zahlen 0 bis 20 steht,
y $-O-CH_2-CHOH-CH_2-$, $-O-CH_2-\underset{CH_2-OH}{\underset{|}{CH}}-$ oder $-NH-CO-$

p für die Zahlen 1 oder 3 und
q für Null oder die Zahl 1 steht,
$R_9$ einen 1 bis 6 C-Atome enthaltenden Alkylrest darstellt,
x für die Zahlen 10 bis 50 und
y für die Zahlen 8 bis 40 steht.

3. Mischung aus Ammoniak und einem oxalkylierten Polysiloxan der allgemeinen Formel (I) und (Ia) gemäß Ansprüchen 1 und 2, in der

$R_1$, $R_2$, $R_3$ und $R_4$ den Methylrest bedeutet,
n für die Zahlen 4 bis 10 und
m für die Zahlen 0 bis 10 steht,
bedeutet,
p für die Zahl 3 und
q für die Zahl 1 steht,
x für die Zahlen 15 bis 35 und
y für die Zahlen 12 bis 25 steht.

4. Mischung gemäß Ansprüchen 1 bis 3, bestehend aus 1,5 bis 99,5 Gew.-Teilen Polysiloxan und 98,5 bis 0,5 Gew.-Teilen Ammoniak.

5. Verwendung der Mischung gemäß Ansprüchen 1 bis 4 als Wärmesensibilisierungsmittel für Kautschuklatices.

6. Verfahren zur Herstellung von wärmesensibilisierten Kautschuklatices, dadurch gekennzeichnet, daß als Wärmesensibilisierungsmittel eine Mischung gemäß Ansprüchen 1 bis 4 in wirksamen Mengen eingesetzt wird.

7. Kautschuklatices enthaltend 0,05 bis 3 Gew.-% Ammoniak und 0,05 bis 10 Gew.-% eines oxalkylierten Polysiloxans gemäß Formel I in Anspruch 1.

**Revendications**

1. Mélange d'ammoniac et d'un polysiloxanne oxyalkylé de formule générale

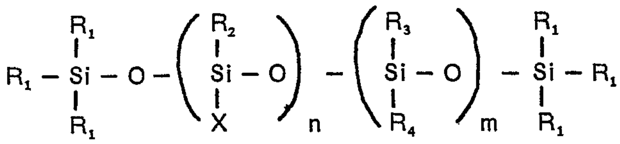

(I)

dans laquelle

$R_1$, $R_2$ et $R_3$ représentent, indépendamment l'un de l'autre, un reste alkyle ou aryle en $C_1$—$C_{10}$ éventuellement substitué par un halogène,

$R_4$ représente l'hydrogène ou un reste alkyle ou aryle en $C_1$—$C_{10}$ éventuellement substitué par un halogène,

n est un nombre entier de 1 à 50 et

m est un nombre entier de 0 à 50 et

X représente le reste

$$—(CH_2)_p—(Y)_q—(O—CHR_5—CHR_6)_x—(O—CHR_8—CHR_7)_y—OR_9 \qquad (Ia)$$

dans lequel

p est un nombre de 1 à 8 et

q est égal à 0 ou à 1,

Y représente 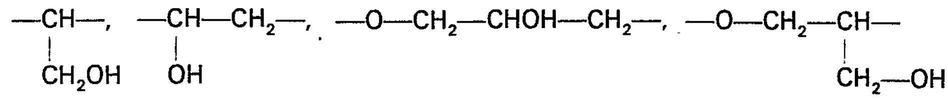

ou —NH—CO—,

$R_5$, $R_6$, $R_7$ représentent l'hydrogène et

$R_8$ représente un méthyle,

$R_9$ représente un reste alkyle d'un alcool inférieur,

x et y représentent les nombre 5 à 100, caractérisé en ce que le reste

$$—(O—CHR_5—CHR_6)_x—(O—CHR_8—CHR_7)_y—OR_9$$

est préparé par réaction d'un alcool inférieur $R_9OH$, d'abord avec un mélange d'oxyde de propylène et de 80 à 90% de la quantité totale de l'oxyde d'éthylène et ensuite avec les 10 à 20% restants de l'oxyde d'éthylène.

2. Mélange d'ammoniac et d'un polysiloxanne oxyalkylé de formules générales (I) et (Ia) dans lequel

$R_1$, $R_2$ et $R_3$ représente le reste méthyle ou le reste phényle et

$R_4$ représente le groupe méthyle ou l'hydrogène,

n représente les nombres 3 à 20, et

m représente les nombres 0 à 20,

y représente —O—$CH_2$—CHOH—$CH_2$—, 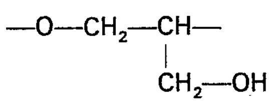 ou —NH—CO—,

p représente les nombres 1 ou 3 et

q est égal à 0 ou à 1,

$R_9$ représente un reste alkyle en $C_1$—$C_6$,

x représente les nombres 10 à 50 et

y représente les nombres 8 à 40.

3. Mélange d'ammoniac et d'un polysiloxanne oxyalkylé de formules (I) et (Ia) selon les revendications 1 et 2, dans lequel

$R_1$, $R_2$, $R_3$ et $R_4$ représentent le reste méthyle,

n représente les nombres 4 à 10, et

m représente les nombres 0 à 10,

p représente le nombre 3 et

q représente le nombre 1,

x représente les nombres 15 à 35 et

y représente les nombres 12 à 25.

4. Mélange selon les revendications 1 à 3, consistant en 1,5 à 99,5 parties en poids de polysiloxanne et 0,5 à 98,5 parties en poids d'ammoniac.

5. Utilisation du mélange selon les revendications 1 à 4, comme thermosensibilisateur pour les latex de caoutchouc.

6. Procédé pour la préparation de latex caoutchouc thermosensibilisés, caractérisé en ce que l'on utilise comme thermosensibilisateur un mélange selon les revendication 1 à 4 en quantités efficaces.

7. Latex de caoutchouc contenant 0,05 à 3% en poids d'ammoniac et 0,05 à 10% en poids d'un polysiloxanne oxyalkylé selon la formule (I) dans la revendication 1.

## Claims

1. A mixture consisting of ammonia and an alkoxylated polysiloxane of the general formula

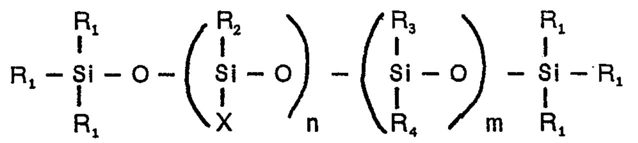 (I)

in which

$R_1$, $R_2$ and $R_3$ independently of one another denote a $C_1$—$C_{10}$-alkyl or aryl radical optionally substituted by halogen,

$R_4$ represents hydrogen or a $C_1$—$C_{10}$-alkyl or aryl radical optionally substituted by halogen,

n represents a number from 1 to 50 and

m represents a number from 0 to 50 and

X represents the radical

$$—(CH_2)_p—(Y)_q—(C—CHR_5—CHR_6)_x—(O—CHR_8—CHR_7)_y—OR_9 \qquad (Ia)$$

p denotes a number from 1 to 8 and

q denotes zero or the number 1,

Y represents 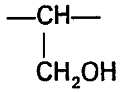 , 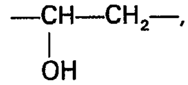, $—O—CH_2—CHOH—CH_2—$, 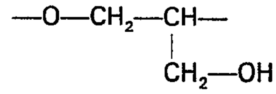

or —NH—CO—

$R_5$, $R_6$ and $R_7$ denote hydrogen and

$R_8$ denotes methyl,

$R_9$ represents an alkyl radical of a lower alcohol,

x and y represent numbers from 5 to 100, characterized in that the radical

$$—(O—CHR_5—CHR_6)_x—(O—CHR_8—CHR_7)_y—OR_9$$

is prepared by reacting a lower alcohol $R_9OH$ first with a mixture of propylene oxide and 80 to 90% of the total amount of the ethylene oxide and then with the remaining 10 to 20% of the ethylene oxide.

2. A mixture consisting of ammonia and an alkoxylated polysiloxane of the general formula (I) and (Ia) according to Claim 1, in which

$R_1$, $R_2$ and $R_3$ denote the methyl or phenyl radical and

$R_4$ denotes the methyl group or hydrogen,

n represents a number from 3 to 20 and

m represents a number from 0 to 20,

Y represents $—O—CH_2—CHOH—CH_2—$, 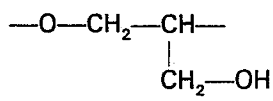 or —NH—CO—

and

p represents the numbers 1 or 3 and q represents zero or the number 1,

$R_9$ represents an alkyl radical containing 1 to 6 C-atoms,

x represents a number from 10 to 50 and

y represents a number from 8 to 40.

3. A mixture of ammonia and an alkoxylated polysiloxane of the general formula (I) and (Ia) according to Claims 1 and 2, in which

$R_1$, $R_2$, $R_3$ and $R_4$ denote the methyl radical,

n represents a number from 4 to 10 and
m represents a number from 0 to 10,
p represents the number 3 and
q represents the number 1,
x represents a number from 15 to 35 and
y represents a number from 12 to 25.

4. A mixture according to Claims 1 to 3, consisting of 1.5 to 99.5 parts by weight of polysiloxane and 98.5 to 0.5 parts by weight of ammonia.

5. Use of the mixture according to Claims 1 to 4 as a heat sensitiser for rubber latices.

6. Process for the production of heat-sensitised rubber latices, characterised in that a mixture according to Claims 1 to 4 is used in active quantities as the heat sensitiser.

7. Rubber latices containing 0.05 to 3% by weight of ammonia and 0.05 to 10% by weight of an alkoxylated polysiloxane according to Formula I in Claim 1.